# EUROPÄISCHE PATENTANMELDUNG

(11) **EP 4 803 253 A1**
(43) Veröffentlichungstag der Anmeldung: **09.09.2026**
(21) Anmeldenummer: 26159154.9
(22) Anmeldetag: 17.02.2026
(51) Int. Cl.: B23K 37/04, E04F 11/18

(54) **WERKZEUG ZUM GLEICHMÄSSIGEN VERTEILEN VON STAKETEN, WERKZEUGSET UND VERFAHREN DAZU**

(30) Priorität: 05.03.2025 CH 2182025
(71) Anmelder: CNS Innovationen GmbH, 6048 Horw (CH)
(72) Erfinder: Furrer, Jörg, 6048 Horw (CH)
(74) Vertreter: Zwick, Evelyn

(57) **Zusammenfassung**

Die Erfindung betrifft ein Werkzeug (10) zur Benutzung bei der Fertigung von Staketengeländern (70), um eine Vielzahl von Staketen (75) zwischen äusseren, parallel befestigten Staketen (74) gleichmässig zu verteilen. Das Werkzeug (10) umfasst zwei gegenübereinander angeordnete und miteinander verbundene Endstücke (21) mit äusseren, parallel zueinander angeordneten Anlageflächen (22) zum Anlegen an zwei benachbarte Staketen (74, 75). Erfindungsgemäss ist an jedem Endstück (21) gegenseitig zu den Anlageflächen (22) ein Führungssystem (31) mit einer oder mehreren Anschlagsflächen (35) angebracht, wobei diese Führungssysteme (31) ineinander eingreifen und eine ausfahrbare Linearführung (30) mit einer zentralen Achse (25) ausbilden, welche normal zu den Anlageflächen (22) verläuft. Das Führungssystem (31) steht beim vollständigen Ausfahren an ihren Anschlagsflächen (35) an und begrenzt dadurch die Distanz (d) der Anlageflächen (22) zueinander, vorzugsweise auf 120 mm. Die Linearführung (30) ist koaxial von einer vorgespannten Spiralfeder (40) umgeben, die sich an den Endstücken (21) abstützt. Die Erfindung betrifft auch ein Werkzeugset (60) und ein Verfahren zum Verteilen von Staketen (75).

## Beschreibung

Die Erfindung betrifft ein Werkzeug zur Benutzung bei der Fertigung von Staketengeländern, um eine Vielzahl von Staketen zwischen äusseren, parallel befestigten Staketen gleichmässig zu verteilen, ein Werkzeugset sowie ein Verfahren zu dessen Anwendung.

### Technisches Gebiet

Staketengeländer aus Metall werden in Innenräumen sowie im Aussenbereich vielerorts verwendet und werden grösstenteils geschweisst. Sie dienen beispielsweise als Treppengeländer sowie als Absturzsicherung zu Abgängen wie Treppenhäusern oder Abhängen. Dabei sind regional geltende Normen einzuhalten, welche die maximal zulässigen Distanzen zwischen den Staketen vorscheiben. Vielerorts darf beispielsweise eine Kugel von 120 mm nicht zwischen zwei Stakten durchgeschoben werden können.

Bei der Herstellung eines Staketengeländers wird vorerst ein Rahmen des Geländers aufgrund der vorgegebenen Masse erstellt. Dieser besteht aus einem Obergurt und einem Untergurt sowie aus seitlich befestigten Staketen, die gemeinsam den äusseren Rand definieren. Unter dem Untergurt sind Stützen zur Montage vorgesehen. Zudem kann oberhalb des Obergurts zusätzlich ein Handlauf angebracht sein. Die Staketen werden zu den seitlich befestigten Staketen gleichmässig verteilt und ausgerichtet, bevor sie an ihren Enden am Obergurt und am Untergurt angeschweisst werden. Typische Breiten der Staketen sind 40 mm oder 50 mm, wobei auch runde Staketen eingesetzt werden können. Bei grösseren Gittern oder Toren, beispielsweise bei Einfahrtstoren können auch breitere Staketen eingesetzt werden.

Um die Einhaltung der maximalen Distanz zwischen zwei Staketen sicherzustellen, werden individuelle Distanzstücke, Lehren oder ein Messinstrument verwendet. Da jedes Geländer am Bau zuerst ausgemessen wird, ändern die Stakten-Abstände mit der Gesamtbreite des Staketengeländers. Wenn mit Distanzstücken gearbeitet wird, entsteht gegen Ende des Staketengeländers ein Fehler durch die Aufsummierung kleinster Ungenauigkeiten. Dieser Fehler wird bei den letzten Stäben, durch Verteilung der Ungenauigkeit kompensiert. Wenn mit Lehren für das gesamte Staketengeländer gearbeitet wird, muss für jede Geländerbreite eine entsprechende Lehre fabriziert werden. Es gibt Fertigungsanlagen, welche die Distanz mechanisch oder elektronisch gesteuert gewährleisten.

### Darstellung der Erfindung

Es ist die Aufgabe der vorliegenden Erfindung, ein Werkzeug zur Verfügung zu stellen, mit dessen Hilfe die gleichmässige Verteilung der Staketen vereinfacht werden kann, sodass keine individuellen Lehren oder Distanzstücke mehr angefertigt werden müssen und das Ausmessen der Distanzen bei der Fertigung der Staketengeländer entfällt. Es sollen auch keine sperrigen Anlagen zur Geländer-Fertigung mehr angeschafft werden müssen. Auch das Zeichnen der einzelnen Staketen in den Fertigungszeichnungen soll entfallen.

Es ist eine weitere Aufgabe der Erfindung, ein Verfahren zu beschreiben, wie die Staketen zwischen äusseren, parallel befestigten Staketen gleichmässig verteilt werden können.

Diese Aufgaben werden gelöst durch die Merkmale der ersten Patentansprüche der jeweiligen Kategorien. Weitere bevorzugte Ausführungsbeispiele werden in den Unteransprüchen beschrieben.

Die erste Aufgabe wird gelöst durch ein eingangs beschriebenes Werkzeug umfassend zwei gegenübereinander angeordnete und miteinander verbundene Endstücke. Diese weisen äussere, parallel zueinander angeordnete Anlageflächen auf, zum Anlegen an zwei benachbarte Staketen.

Erfindungsgemäss ist an jedem Endstück gegenseitig zu den Anlageflächen ein Führungssystem mit einer oder mehreren Anschlagsflächen angebracht, wobei diese Führungssysteme ineinander eingreifen und eine ausfahrbare Linearführung ausbilden. Diese Linearführung weist eine zentrale Achse auf, die normal zu den Anlageflächen verläuft. Beim vollständigen Ausfahren der Linearführung steht das Führungssystem an ihren Anschlagsflächen an und begrenzt dadurch eine Maximaldistanz der Anlageflächen zueinander, beispielsweise auf 120 mm. Auch andere Masse sind möglich. Die Norm EN 1176 beispielsweise verlangt 89 mm. Die Linearführung ist koaxial von einer vorgespannten Spiralfeder umgeben, die sich an den Endstücken abstützt. Erfindungsgemäss wird auch ein Werkzeugset vorgeschlagen, umfassend eine Vielzahl von baugleichen Werkzeugen.

Die Werkzeuge können kürzer werden, wenn beidseitig auf die Anlageflächen eine Kraft aufgebracht wird. Sind mehrere solcher baugleichen Werkzeuge in einer Reihe aneinander angeordnet, so verkürzen sich die Werkzeuge gleichmässig, da jede der baugleichen Federn dieselbe Kraftkomponente aufnimmt. Befinden sich frei bewegliche Staketen zwischen allen Werkzeugen, so sind die Staketen stets gleichmässig voneinander beabstandet, ungeachtet der Stärke der Kraft, die auf die beidseits äussersten Anlageflächen der Reihe wirken.

Die zweite Aufgabe wird durch ein Verfahren zur Nutzung bei der Fertigung von Staketengeländern gelöst, bei dem eine Vielzahl von Staketen zwischen äusseren, parallel befestigten Staketen gleichmässig verteilt werden, unter Verwendung einer Vielzahl von erfindungsgemässen, baugleichen Werkzeugen, mit folgenden Schritten:
- Legen eines Rahmens eines Staketengeländers mit einem Obergurt, einem Untergurt und seitlichen äusseren, parallel befestigten Staketen auf einem mindestens teilweise ebenen Untergrund,
- loses Verlegen von Staketen zwischen den befestigten Staketen,
- Einsetzen von jeweils mindestens einer, vorzugsweise zwei erfindungsgemässen Werkzeugen zwischen zwei benachbarten Staketen, bis zwischen allen Staketen ein oder zwei Werkzeuge geklemmt und durch die Federkraft die Staketen gleichmässig verteilt sind.

Durch die Spiralfedern mit identischen Federstärken von vorzugsweise mindestens 20N, besser etwa oder mindestens 40N, mitteln sich sie Staketen selbsttätig gleichmässig aus. Anschliessend können die Enden der Staketen am Obergurt und am Untergurt angeschweisst und die Werkzeuge wieder entfernt werden. Das Staketengeländer ist dann fertig.

Bei Staketengeländern für Treppen werden Rahmen in Parallelogramm-Form verwendet. Die Staketen und Werkzeuge werden entsprechend der Neigung von Obergurt und Untergurt in der Höhe versetzt angelegt.

Weitere vorteilhafte Ausführungen der vorliegenden Erfindung werden im Zusammenhang mit den Figuren beschrieben.

### Kurze Beschreibung der Zeichnungen

Im Folgenden wird die Erfindung in verschiedenen Zeichnungen dargestellt und mit Hilfe der später erläuterten Bezugszeichen näher erklärt. Aus Übersichtsgründen sind nicht auf allen Figuren sämtliche Elemente bezeichnet. Gleiche Ziffern bezeichnen stets dieselben Sachverhalte.

Es zeigen:
- Fig. 1: Ein erfindungsgemässes Werkzeug mit zwei Montageteilen und einer Springfeder;
- Fig. 2: Das Werkzeug nach Figur 1, aber ohne Springfeder;
- Fig. 3: Ein Montageteil eines Werkzeugs nach Figur 1;
- Fig. 4: Ein Beispiel eines Endstücks;
- Fig. 5: Ein Rahmens eines Staketengeländers mit gleichmässig verteilen Staken, bereit zum Anschweissen der Staketen, oder, wenn bereits angeschweisst, fertiges Staketengeländer;
- Fig. 6: Ein Rahmens eines Staketengeländers für einen Bereich mit einer Steigung, mit gleichmässig verteilen Staken, bereit zum Anschweissen der Staketen. oder, wenn bereits angeschweisst, fertiges Staketengeländer.

### Wege zur Ausführung der Erfindung

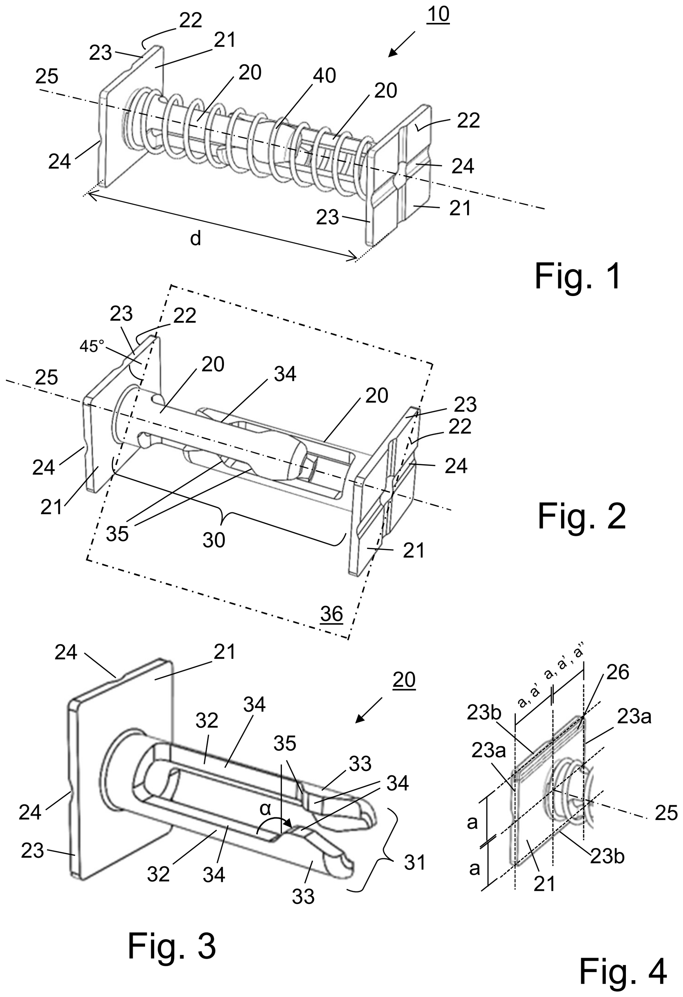

In Fig. 1 ist ein erfindungsgemässes Werkzeug 10 dargestellt in einer bevorzugten Ausführung. Es umfasst im Wesentlichen zwei Montageteile 20, dargestellt in Fig. 3, mit jeweils einem Endstück 21 und einem Führungssystem 31. Die Montageteile 20 sind einander gegenüber angeordnet und greifen mit ihren Führungssystem 31 ineinander ein, wodurch eine Linearführung 30 entsteht, wie in Fig. 2 dargestellt. In dieser Form sind die beiden Montageteile 20 in einem gewissen Hubbereich linear zueinander verschiebbar. Eine vorgespannte Spiralfeder 40 umgibt die Linearführung 30, wie in Fig. 1 dargestellt.

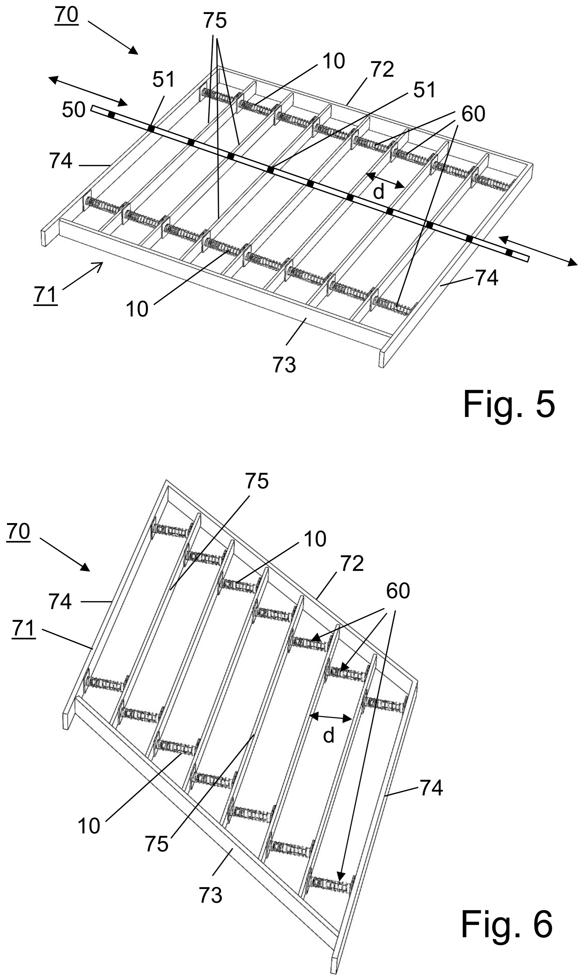

In den Figuren 5 und 6 sind Rahmen 71 von Staken-Geländern 70 dargestellt, die, wenn sie zu fertigen Staketengeländern 70 erstellt sind, auf horizontalem Grund (Fig. 5) oder an einer Treppe (Fig. 6) angebracht werden können. In diesen Rahmen 71 sind gleichmässig Staketen 75 verteilt, die bereit sind zum Anschweissen. Die gleichmässige Verteilung ist gewährleistet durch ein Werkzeugset 60, also eine Vielzahl von baugleichen, erfindungsgemässen Werkzeugen 10, die jeweils zwischen den Staketen 74, 75 eingespannt sind. Durch die Spiralfedern 40 wird gewährleistet, dass die Distanzen d zwischen allen Staketen 74, 75 gleich sind.

In der Folge wird die Erfindung genauer beschrieben.

Die Figuren 1 bis 3 zeigen ein Werkzeug 10 zur Benutzung bei der Fertigung von Staketengeländern 70, um eine Vielzahl von Staketen 75 zwischen äusseren, parallel befestigten Staketen 74 gleichmässig zu verteilen. Dabei ist es unerheblich, ob die befestigten Staketen 74 wie in Fig. 5 einander genau gegenüber oder wie in Fig. 6 versetzt gegenüber angeordnet sind. Die Staketen 74 sind an einem Obergurt 72 und an einem Untergurt 73 zu einem Rahmen 71 verbunden, vorzugsweise zusammengeschweisst. Sobald die Staketen 75 am Obergurt 72 und am Untergurt 73 angeschweisst sind, sind die Staketengeländer 70 fertig.

Jedes Werkzeug 10 umfasst zwei gegenübereinander angeordnete und miteinander verbundene Endstücke 21 mit äusseren, parallel zueinander angeordneten Anlageflächen 22 zum Anlegen an zwei benachbarte Staketen 74, 75, wie beispielsweise in den Figuren 5 und 6 dargestellt. Ein Endstück 21 hat vorzugsweise die Grundform einer Platte, beispielsweise mit einer Stärke von 2 bis 10 mm oder bevorzugt 3 bis 5 mm.

An jedem Endstück 21 ist gegenseitig zu den Anlageflächen 22 ein Führungssystem 31 mit einer oder mehreren Anschlagsflächen 35 angebracht. Zwei einander zugewandte Führungssysteme 31 greifen ineinander ein und bilden eine ausfahrbare Linearführung 30 aus mit einer veränderbaren Distanz d zwischen den beiden Anlageflächen 22. Die Linearführung 30 hat eine zentrale Achse 25, welche normal zu den Anlageflächen 22 verläuft. Jedes Führungssystem 31 stehen beim vollständigen Ausfahren mit senen Anschlagsflächen 35 an den Anschlagsflächen 35 des jeweils anderen Führungssystems 31 an, wodurch die Distanz d der Anlageflächen 22 zueinander begrenzt wird, vorzugsweise auf 120 mm. Je nach lokalen Vorschriften kann die Begrenzung der Distanz d auch auf andere Längen eingerichtet sein.

Die Führungssysteme 31 beider Montageteile 20 sind im vorliegenden Fall baugleich ausgestaltet, was vorteilhaft, aber nicht zwingend ist. Es ist auch möglich, konzentrische ineinander eingreifende Rohre zu verwenden, die an ihren Enden Anschlagsflächen 35 aufweisen, um die geforderte Längenbegrenzung zu gewährleisten.

Die Linearführung 30 ist koaxial von einer vorgespannten Spiralfeder 40 umgeben, die sich an den Endstücken 21 abstützt, wie in Fig. 1 dargestellt. Somit ist im Ruhezustand des Werkzeugs 10 die Distanz d der Anlageflächen 22 stets maximal, beispielsweise 120 mm, da die vorgespannte Spiralfeder die Endstücke 21 mit ihrer Vorspannkraft auf die maximal mögliche Länge ausdehnt. Diese Länge wird durch die Anschlagsflächen 35 an den Führungsstreifen beider Montageteile 20 begrenzt, die beim vollständigen Ausfahren der Linearführung 20 aneinander anstehen.

Bevorzugt hat jedes der Endstücke 21 eine rechteckige oder quadratische Grundform mit Kanten 23 von vorzugsweise 40 mm und/oder 50 mm Länge. Vorzugsweise sollte die Höhe des Werkzeugs 10 beim Gebrauch der Höhe der Staketen 75 entsprechen, die verteilt werden sollen. Die Achsen verlaufen vorzugsweise, aber nicht zwingend, mittig durch die Endstücke 21.

Insbesondere können auf den Anlageflächen 22 parallel zu den Kanten 23 durch die Achse 25 verlaufende Rillenprofile 24 ausgestaltet sein, in welchen im Gebrauch runde Staketen 75 geführt werden können. Diese Rillenprofile 24 haben beispielsweise eine Breite von 7 ± 2 mm und/oder einen Radius von 5 ± 1 mm. So ist gewährleistet, dass Staketen 75 mit einem grösseren Radius als dem Rillenradius an den Rillenkanten der Rillenprofile 24 aufliegen und durch diese gehalten werden. Staketen 75 mit dünneren Radien liegen entsprechend tiefer in der Rille, wodurch die Distanzen d der Staketen 75 etwas weniger als zugelassene Distanz zwischen den Anlageflächen 22 zu liegen kommen. Dies ist durchaus gewollt, wegen der geringeren Stabilität dünnerer Staketen 75.

In einer bevorzugten Version umfasst jedes Führungssystem 31 zwei sich gegenüber liegende, an einer Symmetrieebene 36 spiegelsymmetrisch zueinander ausgestaltete Führungsstäbe 32, welche in breiteren Führungsköpfen 33 enden, wobei die Führungsköpfe 33 an den Führungsstäben 32 des anderen Führungssystems 31 anliegen und im Gebrauch beim Bewegen an diesen Führungsstäben 32 geführt werden. Im dargestellten Beispiel weist jeder Führungskopf 33 und jeder Führungsstab 32 je zwei Führungsflächen 34 auf, die im Gebrauch an entsprechenden Führungsflächen 34 des anderen Führungssystems 31 gleiten.

Vorzugsweise sind die Anschlagsflächen 35 beim Übergang zwischen den Führungsstäben 32 und den Führungsköpfen 33 ausgestaltet und um 135° ± 10° zur Achse geneigt, sodass die Führungsköpfe 33 beim plötzlichen Entlasten der gespannten Spiralfeder 40 dämpfend gegen die Spiralfeder 40 nach aussen gedrückt und an dieser arretiert werden.

Die Spiralfeder 40 sorgt also auch für die Stabilität des Werkzeugs 10, das in der beschriebenen Form lediglich aus den zwei baugleichen Montageteilen 20, umfassend je ein Endstück 21 und ein Führungssystem 31, und der Spiralfeder 40 besteht, ohne Verwendung von Schrauben oder anderen Hilfsmitteln zur Montage. Für die Montage wird die Spiralfeder 40 über das Führungssystem 31 eines Montageteil 20 gebracht und vollständig an dessen Endstück 21 gespannt, während das zweite Montageteil 20 mit seinem Führungssystem 31 ins Führungssystem 31 des ersten Montageteils 20 eingebracht wird, zur Schaffung der Linienführung 30. Dies gelingt, weil die Führungsstäbe 32 mit den Führungsköpfen 33 die notwendige Elastizität dafür aufweisen und sich kurzzeitig aufspreizen können. Die Spiralfeder 40 wird schliesslich losgelassen, sodass sie den gesamten Raum zwischen den Endstücken 21 einnimmt. Das Führungssystem kann nun nicht wieder gelöst werden, weil sich die Führungsstäbe 32 mit den Führungsköpfen 33 nicht mehr aufspreizen lassen, wegen der Spiralfeder 40, welche den äusseren Umfang der Linearführung begrenzt. Der Innendurchmesser der Spiralfeder 40 ist dazu nur so breit, dass die Führungsköpfe 33 beim Spreizen, das durch Auseinanderziehen der Endstücke 21 erreicht werden kann, an der Spiralfeder 40 innen anstehen, bevor sie an den Führungsköpfen 33 der jeweils anderen Montageteile 20 vorbeigleiten können. Zur Demontage muss die Spiralfeder 40 erst wieder vollständig zu einem der Endstücke 21 gebracht werden.

Bei Endstücken 21 mit einer rechteckigen Grundform ist die Symmetrieebene 36 der Führungsstäbe 32 vorzugsweise zu 45° gegenüber den Kanten 23 der Grundform geneigt. Dadurch können baugleiche Montageteile 20 derart ineinander eingreifen, dass bei beiden gegenüber liegenden Endstücken 21 dieselben Abstände a von der Achse 25 zu jeder Kante 23 derselben Orientierung vorherrschen. Dies hat insbesondere den Vorteil, dass dadurch baugleiche Montageteile 20 zur Herstellung eines Werkzeugs 10 verwendet werden können. Insbesondere wenn die Montageteile 20 einstückig, beispielsweise durch Spritzgiessen hergestellt werden, ist dies ein grosser Vorteil.

In einer Variante, dargestellt in Fig. 4, haben die Endstücke 21 eine rechteckige Grundform mit ersten Kanten 23a mit einer Kantenlänge von beispielsweise 40 mm und zweiten Kanten 23b mit einer Kantenlänge von beispielsweise 50 oder 55 mm Länge, wobei die Achse 25 der Linearführung 30 mittig zwischen den zweiten Kanten 23b angeordnet ist, beispielsweise mit je 20 mm Abstand a dazu, und entweder mittig zwischen den ersten Kanten 23a, beispielsweise mit je 25 mm Abstand a' dazu, oder versetzt von der Mitte, beispielsweise mit 25 mm Abstand a' resp. 30 mm Abstand a" zu den ersten Kanten 23a, um insgesamt drei verschiedene Staketenbreiten mittig an der Achse 25 aufnehmen zu können. Während beide Abstände a von der Achse 15 zur den zweiten Kanten 23b stets beide gleich sein müssen, so können die beiden Abstände a, a', a" zu den beiden ersten Kanten 23a entweder beide den Abstand a, beide den Abstand a', oder einer den Abstand a', der andere den Abstand a" haben.

In der Regel werden lediglich zwei verschiedene Masse verlangt, sodass die Achse 25 mittig durch das Endstück 21 verläuft mit den Abständen a resp. a' zu den Rändern 23b resp. 23a.

Wenn die Achse nur mittig zwischen den ersten Kanten 23a und nicht mittig zwischen den zweiten Kanten 23b angeordnet ist, ist es möglich, insgesamt drei verschiedene Abstände a, a' und a" von der Achse 25 zu einer Kante 23 zu erzielen, nämlich, gemäss dem oben genannten Beispiel, 20, 25 und 30 mm. Dadurch ist es möglich, das Werkzeug 10 bündig neben einer Stakete 75 auf einen flachen Untergrund zu legen, wobei die Achse 25 mittig an der Stakete 75 angreift, wenn diese eine Breite von 40, 50 oder 60 mm aufweist. Die Breite der Stakete 75 ist doppelt so gross wie der Abstand a, a' oder a" von der Achse 25 zum Untergrund, demnach 2·a, 2·a' oder 2·a". Die obere Kante 23 des Endstücks 31 mag dann zwar nicht immer bündig mit der oberen Kante 23 der Stakete 75 verlaufen, bei einer Anordnung nach Fig. 5 oder 6, was aber unbedeutend ist. Bedeutend ist, dass mit baugleichen Montageteilen 20 insgesamt drei verschiedene Breiten von Staketen 75 gleichmässig verteilt werden können, wobei die Federkraft stets mittig auf die Staketen 74, 75 drückt.

Dies ist insbesondere auch bei Staketen 75 mit runden Querschnitten wichtig, wenn sie zwischen befestigten Staketen 74 verteilt werden, die flach ausgestaltet sind mit einer gewissen Breite, beispielsweise 50 mm.

Es ist stets darauf zu achten, dass alle Werkzeuge 10 mit gleich ausgerichteten Endstücken 21 auf den Untergrund aufgelegt werden, mit demselben Abstand a, a', a" von der Achse 25 zum Untergrund. Dazu kann es von Vorteil sein, wie in Fig, 4 gezeigt, wenn beide Endstücke 21 aller Werkzeuge 10 an jeweils gegenüberliegenden Kanten 23 eine Markierung 26 aufweisen, vorzugsweise Farbmarkierungen oder Prägungen, um die identische Ausrichtung aller Werkzeuge 10 im Gebrauch leichter kontrollieren zu können. Auch können Masse wie «20» oder «25» auf dem Endstück angegeben werden, um vor dem Verlegen resp. Verklemmen jedes Werkzeugs 10 stets in die richtige Ausrichtung zu bringen.

Als weitere Kontrolle kann zusätzlich zum Werkzeug 10 ein Gummiband 50 mit einer Vielzahl von Abstandsmarkierungen 51 hinzugezogen werden, welche gleichmässig beabstandet sind. Der Markierungsabstand ist vorzugsweise viel kleiner als die maximale Distanz d der Anlageflächen 21 zueinander, vorzugsweise etwa 50 bis 75% davon, um auf das gewünschte Mass gestreckt werden zu können. Beim Nahebbringen an die verteilten Staketen 75, wie in Fig. 5 gezeigt, kann eine schnelle, visuelle Kontrolle durchgeführt werden. Beim Strecken des Gummibandes 50 verteilen sich die Zwischenräume zwischen den Abstandsmarkierungen 51 gleichmässig, sodass diese jeweils an den Stellen der Staketen 75 sein müssen. Sollte ein Werkzeug 10 oder eine Stakete 75 beim Einrichten der Werkzeuge 10 zwischen der Staketen 75 verklemmt sein und daher keine gleichmässige Verteilung gewährleisten, so kann dies mit dem Gummiband 50 leicht optisch überprüft werden.

Zu verwenden ist insbesondere ein Werkzeugset 60 umfassend eine Vielzahl von baugleichen Werkzeugen 10, um sie zwischen allen benachbarten Staketen 74, 75 platzieren zu können, wie in den Figuren 5 und 6 dargestellt ist. Das zu fertigende Staketengeländer 70 gemäss Fig. 5 ist für einen ebenen Untergrund geeignet, das in Fig. 6 für einen Untergrund mit Gefälle oder für ein Treppengeländer 70. Mit den Werkzeugen 10 zwischen den Staketen 74, 75 werden diese selbsttätig gleichmässig verteilt, solange baugleiche Werkzeuge 10 verwendet werden.

In der Folge wird ein erfindungsgemässes Verfahren zur Nutzung bei der Fertigung von Staketengeländern 70 beschrieben, um eine Vielzahl von Staketen 75 zwischen äusseren, parallel befestigten Staketen 74 gleichmässig zu verteilen. Dazu wird ein Werkzeugset 60 umfassend eine Vielzahl von Werkzeugen 10 verwendet. Das Verfahren ist gekennzeichnet durch die folgenden Schritte:
- Zunächst wird ein Rahmen eines Staketengeländers 70 mit einem Obergurt 72, einem Untergurt 73 und seitlichen äusseren, parallel befestigten Staketen 74 auf einem mindestens teilweise ebenen Untergrund gelegt. Der Untergrund sollte mindestens in dem Bereich flach sein, in welchem später die Werkzeuge 10 zu liegen kommen, damit sie plan mit den Staketen 74, 75 aufliegen können.
- Anschliessend werden die Staketen 75 lose zwischen den befestigten Staketen 74 verlegt.
- Dabei werden jeweils zwischen zwei benachbarte Staketen 74, 75 mindestens eine, vorzugsweise zwei Werkzeuge 10 eingesetzt, bis zwischen allen Staketen 74, 75 ein oder zwei Werkzeuge geklemmt sind. Durch die Federkraft der Spiralfedern 40 verteilen sich die Staketen 75 gleichmässig und selbsttätig.

Die Werkzeuge 10 werden derart zwischen den Staketen 74, 75 platziert, dass ihre Anlageflächen 22 an den Staketen 74, 75 anliegen. Dabei sollen die Achsen 25 der Werkzeuge 10 mittig an den Staketen 74, 75 anliegen. Wenn die Staketen 74, 75 runde Stäbe sind, sollen die diese in den Rillenprofilen 24 der Werkzeuge 10 aufgenommen werden. Vorzugsweise ist der Abstand a, a', a" von der Achse 25 zum Untergrund halb so lang wie die Breite von Obergurt 72 und Untergrund 73, die ebenfalls auf dem Untergrund aufliegen, damit die runden Staketen 75 mittig daran angeschweisst werden.

Die Endstücke 21 werden vorzugsweise derart ausgerichtet, dass der doppelte Abstand 2·a, 2·a', 2·a" zwischen der Achse 25 und dem Untergrund der Breite der verwendeten Staketen 75 entspricht, damit die Federkraft mittig auf die Staketen 75 wirkt.

Die Werkzeuge 10 und Staketen 75 werden bei der Montage erst lose alternierend nebeneinander auf den Untergrund gelegt, bis die letzte verlegte Stake 75 näher bei der befestigten Stakete 74 ist als die Distanz d eines Werkzeugs. Dann werden in diesen Zwischenraum eine oder zwei Werkzeuge 10 eingepresst, indem alle andere Spiralfedern verspannt werden. Durch die identische Federkonstanten aller Spiralfedern 40 verteilen sich die Staketen 75 selbsttätig gleichmässig im Rahmen 71.

Wenn die Distanz d der Werkzeuge 10 in Ruhelage, also vor dem Verspannen, der zugelassenen Distanz zwischen den Staketen 75 entspricht, müssen lediglich die letzten ein oder zwei Werkzeuge 10 zwischen zwei letzten Staketen 74, 75 eingepresst werden. Dadurch ist gewährleistet, dass die minimale Anzahl Staketen 75 verwendet wurden und die maximal zugelassene Distanz eingehalten wurde. Ist die zugelassene Distanz aber geringer als die Distanz d der Werkzeuge 10, so muss nachgemessen werden und allenfalls eine weitere Stakete und infolgedessen ein oder zwei weitere Werkzeuge 10 eingepresst werden, so lange, bis die Anforderung erfüllt ist.

### Bezugszeichenliste

- 10: Werkzeug
- 20: Montageteil
- 21: Endstück
- 22: Anlageflächen
- 23: Kante, 23a: erste Kanten, 23b: zweite Kanten des Endstücks
- 24: Rillenprofil
- 25: Achse
- 26: Markierung am Endstück
- 30: Linearführung
- 31: Führungssystem
- 32: Führungsstab
- 33: Führungskopf
- 34: Führungsfläche
- 35: Anschlagsfläche
- 36: Symmetrieebene
- 40: Spiralfeder
- 50: Gummiband
- 51: Abstandsmarkierung
- 60: Werkzeugset
- 70: Staketengeländer, Treppengeländer
- 71: Rahmen des Staketengeländers
- 72: Obergurt
- 73: Untergurt
- 74: befestigte Stakete,
- 75: Stakete
- α: Neigungswinkel
- a, a', a": Abstand von der Achse zu einer Kante eines Endstücks
- d: Distanz der Anlageflächen zueinander

## Patentansprüche

1. Werkzeug (10) zur Benutzung bei der Fertigung von Staketengeländern (70), um eine Vielzahl von Staketen (75) zwischen äusseren, parallel befestigten Staketen (74) gleichmässig zu verteilen, umfassend zwei gegenübereinander angeordnete und miteinander verbundene Endstücke (21) mit äusseren, parallel zueinander angeordneten Anlageflächen (22) zum Anlegen an zwei benachbarte Staketen (74, 75),
**dadurch gekennzeichnet, dass** an jedem Endstück (21) gegenseitig zu den Anlageflächen (22) ein Führungssystem (31) mit einer oder mehreren Anschlagsflächen (35) angebracht ist, wobei diese Führungssysteme (31) ineinander eingreifen und eine ausfahrbare Linearführung (30) mit einer zentralen Achse (25) ausbilden, welche normal zu den Anlageflächen (22) verläuft, wobei das Führungssystem (31) beim vollständigen Ausfahren an ihren Anschlagsflächen (35) ansteht und dadurch die Distanz (d) der Anlageflächen (22) zueinander begrenzt, vorzugsweise auf 120 mm, und wobei die Linearführung (30) koaxial von einer vorgespannten Spiralfeder (40) umgeben ist, die sich an den Endstücken (21) abstützt.

2. Werkzeug nach Anspruch 1, **dadurch gekennzeichnet, dass** die Endstücke (21) eine rechteckige oder quadratische Grundform haben mit Kanten (23) von vorzugsweise 40 mm und/oder 50 mm Länge.

3. Werkzeug nach Anspruch 2, **dadurch gekennzeichnet, dass** auf den Anlageflächen (22) parallel zu den Kanten (23) durch die Achse (25) verlaufende Rillenprofile (24) ausgestaltet sind, in welchen im Gebrauch runde Staketen (75) geführt werden können.

4. Werkzeug nach einem der vorhergehenden Ansprüche, **dadurch gekennzeichnet, dass** jedes Führungssystem (31) zwei sich gegenüber liegende, an einer Symmetrieebene (36) spiegelsymmetrisch zueinander ausgestaltete Führungsstäbe (32) umfasst, welche in breiteren Führungsköpfen (33) enden, wobei die Führungsköpfe (33) an den Führungsstäben (32) des anderen Führungssystems (31) anliegen und im Gebrauch beim Bewegen an den Führungsstäben (32) geführt werden.

5. Werkzeug nach Anspruch 4, **dadurch gekennzeichnet, dass** die Anschlagsflächen (35) beim Übergang zwischen den Führungsstäben (32) zu den Führungsköpfen (33) ausgestaltet sind und um 135°± 10° zur Achse geneigt sind, sodass die Führungsköpfe (33) beim plötzlichen Entlasten der gespannten Spiralfeder (40) dämpfend gegen die Spiralfeder (40) nach aussen gedrückt und an dieser arretiert werden.

6. Werkzeug nach Anspruch 4 oder 5, **dadurch gekennzeichnet, dass** die Endstücke (21) eine quadratische oder rechteckige Grundform aufweisen und die Symmetrieebene (36) der Führungsstäbe (32) zu 45° gegenüber den Kanten (23) der Endstücke (21) geneigt ist.

7. Werkzeug nach einem der Ansprüche 4 bis 6, **dadurch gekennzeichnet, dass** beide Endstücke (21) mit ihren Führungssystemen (31) baugleich zueinander sind.

8. Werkzeug nach einem der Ansprüche 4 bis 7, **dadurch gekennzeichnet, dass** jedes der Endstücke (21) mit dem Führungssystem (31) als einstückiges Montageteil (20) hergestellt ist, vorzugsweise als Spritzgussteil.

9. Werkzeug nach einem der vorhergehenden Ansprüche, **dadurch gekennzeichnet, dass** die Endstücke (21) eine rechteckige Grundform haben mit ersten Kanten (23a) mit einer Kantenlänge von beispielsweise 40 mm und zweiten Kanten (23b) mit einer Kantenlänge von beispielsweise 50 oder 55 mm Länge, wobei die Achse (25) der Linearführung (30) mittig zwischen den zweiten Kanten (23b) angeordnet ist, beispielsweise mit je 20 mm Abstand (a) dazu, und entweder mittig zwischen den ersten Kanten (23a), beispielsweise mit je 25 mm Abstand (a') dazu, oder versetzt von der Mitte, beispielsweise mit 25 mm (a') resp. 30 mm (a") zu den ersten Kanten (23a), um insgesamt zwei (2·a, 2·b) oder drei verschiedene Staketenbreiten (2·a, 2·b', 2·b") mittig an der Achse (25) aufnehmen zu können.

10. Werkzeug nach Anspruch 9, **dadurch gekennzeichnet, dass** die Endstücke (21) beispielsweise im Bereich einer Kante (23) eine Markierung (26) aufweisen, vorzugsweise eine Farbmarkierung oder Prägung, um die Ausrichtung der Werkzeuge (10) im Gebrauch leichter kontrollieren zu können.

11. Werkzeug nach einem der vorhergehenden Ansprüche, **gekennzeichnet durch** ein Gummiband (50) mit einer Vielzahl von Abstandsmarkierungen (51), welche gleichmässig beabstandet sind mit einem Grundabstand (51), der viel kleiner ist als die maximale Distanz (d) der Anlageflächen (22), vorzugsweise etwa 50 bis 75% davon, um eine schnelle, visuelle Kontrolle durchführen zu können.

12. Werkzeugset (60) umfassend eine Vielzahl von baugleichen Werkzeugen (10) nach einem der vorhergehenden Ansprüche, um zwischen allen benachbarten Staketen platzieren zu können, um eine gleichmässige Verteilung der Staketen (74, 75) zu erreichen.

13. Verfahren zur Nutzung bei der Fertigung von Staketengeländern (70), um eine Vielzahl von Staketen (75) zwischen äusseren, parallel befestigten Staketen (74) gleichmässig zu verteilen, unter Verwendung eines Werkzeugsets (60) nach Anspruch 12, **gekennzeichnet durch** die Schritte:
- Legen eines Rahmens (71) eines Staketengeländers (70) mit einem Obergurt (72), einem Untergurt (73) und seitlichen äusseren, parallel befestigten Staketen (74) auf einem mindestens teilweise ebenen Untergrund,
- Loses verlegen von Staketen (75) zwischen den befestigten Staketen (74),
- Einsetzen von mindestens einem, vorzugsweise jeweils zwei Werkzeugen (10) zwischen zwei benachbarten Staketen (74, 75), bis zwischen allen Staketen (74, 75) ein oder zwei Werkzeuge (10) geklemmt sind und durch die Federkraft die Staketen (75) gleichmässig verteilt sind.

14. Verfahren nach Anspruch 13, wobei die Endstücke (21) derart ausgerichtet sind, dass der doppelte Abstand (2·a, 2·a', 2·a") zwischen der Achse (25) und der unteren Kante (23) beim Untergrund der Breite der verwendeten Staketen (75), oder, bei runden Staketen, der Breite von einem Obergurt (72) und/oder Untergurt (73) entspricht, damit die Federkraft der Spiralfeder (40) mittig auf die Staketen (75) wirkt und, bei runden Staketen (75), diese mittig am Obergurt (72) und/oder Untergurt (73) positioniert sind.
